(19) **Europäisches Patentamt**
**European Patent Office**
**Office européen des brevets**

(11) **EP 4 553 701 A1**

(12) **EUROPEAN PATENT APPLICATION**

(43) Date of publication:
14.05.2025 Bulletin 2025/20

(21) Application number: 23306960.8

(22) Date of filing: **13.11.2023**

(51) International Patent Classification (IPC):
***G06N 3/048*** (2023.01)     ***G06N 3/09*** (2023.01)

(52) Cooperative Patent Classification (CPC):
**G06N 3/048; G05B 23/0283; G06N 3/09**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dassault Systèmes**
**78140 Vélizy-Villacoublay (FR)**

(72) Inventors:
• TLILI, ALI
**Vélizy-Villacoublay (FR)**
• KHALED, Oumaima
**Vélizy-Villacoublay (FR)**
• KIENTZ, Leonard
**Vélizy-Villacoublay (FR)**

(74) Representative: **Bandpay & Greuter**
**11 rue Christophe Colomb**
**75008 Paris (FR)**

(54) **PREDICTING A MAINTENANCE STATUS OF A REAL-WORLD DEVICE**

(57)     The disclosure notably relates to a computer-implemented method for predicting a maintenance status of a real-world device. The method comprises providing a dataset. The dataset includes data describing historical real-world maintenance events and properties of devices of a same type as the real-world device. The method further comprises training, based on the dataset, a neural network to predict parameters of a MCDA sorting model. The MCDA sorting model is configured to take as input at least one time measurement of maintenance-related physical and/or functional data of the real-world device and to output a prediction of a maintenance status of the real-world device.

EP 4 553 701 A1

**Description**

**TECHNICAL FIELD**

The disclosure relates to the field of computer programs and systems, and more specifically to a method, system and program for predicting a maintenance status of a real-world device.

**BACKGROUND**

Maintenance is a crucial activity in many technical fields (*e.g.* industry, energy, transportation) with significant impact reliability of numerous devices. Any unplanned downtime of machinery, equipment, or devices can interrupt a production process, can lead to a safety failure, an energy blackout, accidents. For example, an airplane part which has not undergone the proper maintenance at the proper time can result in dramatic consequences. Therefore, it is becoming critical in many technical fields to develop a well-implemented and efficient maintenance strategy.

Maintenance strategies have evolved from reactive maintenance to preventive maintenance. Reactive maintenance is only executed to restore the operating state of the equipment after failure occurs. Preventive maintenance is carried out according to a planned schedule based on time or process iterations to prevent breakdown, and thus may perform unnecessary maintenance.

Predictive Maintenance is a newer paradigm that performs maintenance only after analytical models predict certain failures or degradations. This approach allows the maintenance frequency to be as low as possible to prevent unplanned reactive maintenance, without doing too much preventive maintenance. Emerging technologies have made the predictive maintenance more accessible and enhanced its potential to detect, isolate, and identify the precursor and incipient faults of machinery equipment and components, monitor and predict the progression of faults, and provide decision-support or automation to develop maintenance schedules.

In the pursuit of effective predictive maintenance, various techniques have been developed and can be categorized into four primary types: Model-Based, Data-Based, Hybrid, and Vibration and Sound Analysis Techniques.

Model-Based Techniques utilize mathematical models, such as Weibull analysis, to predict component failure. Despite their simplicity and ease of application, these models often fall short as they generally assume that failure is a stochastic process with a limited number of input variables. This assumption is not always applicable, for example for complex industrial systems. On the other hand, Data-Based Techniques use historical data to train models that can predict failures. These techniques are capable of handling complex systems. However, the interpretation and validation of their predictions can pose significant challenges. Hybrid Techniques attempt to strike a balance by combining elements from both model-based and data-based techniques. These provide a good compromise between accuracy and interpretability. However, they may still be limited in terms of accuracy and ability to handle complexity. Lastly, Vibration and Sound Analysis Techniques focus on the analysis of vibrations or sounds produced by a machine to predict possible failures. These techniques often require specialized sensors and a deep understanding of signal analysis. Moreover, these techniques may struggle in systems with multiple failure criteria.

Within this context, there is a need for improved solutions for predicting a maintenance status of a real-world device.

**SUMMARY**

It is therefore proposed a computer-implemented method for predicting a maintenance status of a real-world device. The method comprises providing a dataset. The dataset includes data describing historical real-world maintenance events and properties of devices of a same type as the real-world device. The method further comprises training, based on the dataset, a neural network to predict parameters of a MCDA sorting model. The MCDA sorting model is configured to take as input at least one time measurement of maintenance-related physical and/or functional data of the real-world device and to output a prediction of a maintenance status of the real-world device.

The method may comprise one or more of the following:

- the MCDA sorting model is a NCS model;
- the neural network is based on a sigmoid activation function for implementation of comparison rules in the MCDA sorting model, and at least one parameter of the MCDA sorting model is a sigmoid function implementing comparison rules; and/or
- the maintenance status is one of: normal operation, maintenance advised, and maintenance required.

It is further provided a MCDA sorting model obtainable according to the method.

It is further provided a MCDA sorting model configured to take as input time measurements of maintenance-related physical and/or functional data of a real-world device and to output a prediction of a maintenance status of the real-world device. At least one parameter of the MCDA sorting model is a sigmoid function implementing comparison rules.

It is provided a method of use of one of the two above provided models. The method of use comprises providing at least one time measurement of maintenance-related physical and/or functional data of the real-world device. The method of use further comprises applying the MCDA sorting model to the provided at least one time measurement, thereby outputting a prediction of a maintenance status of the real-world device.

The method of use may comprise one or more of the following:

- the at least one time measurement consists in at least one real-time measurement;
- the MCDA sorting model is applied in real-time;
- the at least one time measurement stems from at least one physical sensor of the device and/or attached to the device;
- the method of use further comprises:

  ○ comparing one or more predictions of the MCDA sorting model with one or more real-world maintenance statuses of the device; and
  ○ if the comparison results in a disparity, updating the MCDA sorting model based on the one or more real-world maintenance statuses of the device; and/or

- the method of use further comprises performing maintenance of the device based on the prediction of the MCDA sorting model.

It is further provided a computer program comprising instructions for performing the method and/or the method of use.

It is further provided a computer readable storage medium having recorded thereon the computer program and/or one or both of the two above provided models.

It is further provided a computer system comprising a processor coupled to a memory, the memory having recorded thereon the computer program and/or one or both of the two above provided models.

It is further provided a device comprising a data storage medium having recorded thereon the computer program and/or one or both of the two above provided models.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG.s 1 to 4 illustrate the methods; and

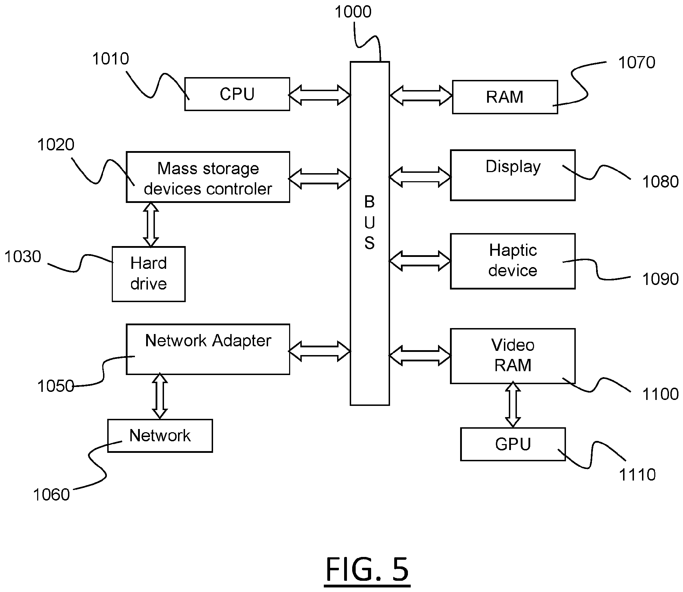

- FIG. 5 shows an example of the computer system.

## DETAILED DESCRIPTION

It is proposed a computer-implemented method for predicting a maintenance status of a real-world device. The method comprises providing a dataset. The dataset includes data describing historical real-world maintenance events and properties of devices of a same type as the real-world device. The method further comprises training, based on the dataset, a neural network to predict parameters of a MCDA sorting model. The MCDA sorting model is configured to take as input at least one time measurement of maintenance-related physical and/or functional data of the real-world device and to output a prediction of a maintenance status of the real-world device.

This constitutes an improved solution for predicting a maintenance status of a real-world device.

Notably, the method learns a MCDA (Multi-criteria decision-aiding) sorting model configured to take as input at least one time measurement of maintenance-related physical and/or functional data of the real-world device and to output a prediction of a maintenance status of the real-world device. In other words, the method learns a MCDA sorting model for predicting a maintenance status of the real-world device based on relevant measured maintenance-related data. The method thus applies the MCDA sorting paradigm to the problem of predicting a maintenance status of a real-world device, which is a new and unconventional approach. The prediction of the maintenance status thus benefits from the power of MCDA sorting models.

Furthermore, the method learns the MCDA model using a neural network, which is an unconventional approach.

Indeed, learning the MCDA model, or rather its parameters, is normally done through conventional methods such as Mixed Integer Programming (MIP) and logical formulations. The proposed method instead learns, on the training data, a neural network. This neural network is trained to/learns to predict the parameters of the MCDA model. This allows extensive customization, as the neural network can be trained on specific data so that the MCDA model be customized for a specific maintenance use case. This differentiates the proposed method from more generic predictive maintenance strategies, providing a more tailored solution.

Moreover, the method, and the MCDA sorting model that the method infers through prediction of its parameters by the training of the neural network, are usable (e.g. according to the method of use) for predicting the maintenance status of a real-world device. In other words, the MCDA sorting model, once inferred, can be fed as inputs physical measurements (e.g. measured by sensors) describing physical and/or functional data about the real-world device, and, upon reception of these data, predict a maintenance status of the device (for example "normal operation" (i.e. no maintenance required), "maintenance advised", or "maintenance required"). In other words, the model predicts (and thus indirectly measures) an internal functioning state (in terms of whether the operation is normal or maintenance must be done) of the device based on physical measurements of maintenance-related physical and/or functional data. The maintenance status may be outputted to a user of the device (e.g. an owner of a heat pump, an airplane pilot) or transmitted to a company or organization in charge of the maintenance of the device or to the manufacturer of the device, which in any case allow to perform the necessary maintenance physical actions to return the device to its normal operation state.

The proposed method and its examples also offer the following advantages:

- Predictive maintenance is a field that has seen significant evolution over the years, transitioning from model-based techniques, which use predefined models to predict maintenance state, to data-based techniques, which learn directly from historical or real-time data. There are also hybrid techniques, which combine elements of the previous two, as well as vibration and sound analysis-based techniques, which focus on the detection of specific faults. However, despite these advances, there is still room for improvement, as demonstrated by the proposed new approach which uses a neural network to train a multi-criteria decision aid model, specifically a MCDA sorting model, for example a NCS model.

- Model-based techniques, while offering high interpretability, typically have moderate accuracy due to their simplistic nature. Additionally, they have a low ability to handle complexity and low sensitivity to data, which limits their usefulness in complex situations or when data is rapidly changing. The proposed approach overcomes these limitations by using a neural network to train the sorting model, allowing it to capture complex patterns in maintenance data and improve the accuracy of predictions.

- Data-based techniques can handle complexity and offer high accuracy, but they often have an interpretability issue, as they are seen as "black boxes". Indeed, it can be challenging to understand how they arrive at their conclusions. The proposed approach overcomes this downside by combining a rule-based model (the sorting model) with a neural network. The sorting model offers interpretability, as it is based on defined rules, while the neural network offers the ability to handle complex patterns.

- Hybrid techniques combine model-based and data-based techniques in an attempt to harness the benefits of each. However, they may still be limited in terms of accuracy and ability to handle complexity. Similarly, vibration and sound analysis is a specialized technique that can be highly useful for detecting certain types of faults but is less useful for other types of maintenance problems.

- The proposed approach offers increased flexibility by being able to handle various forms of functional data, including previous maintenance plans and real-time sensor qualitative and quantitative data. This contrasts with some traditional approaches that may require specific data types or be limited in their ability to handle real-time data.

- In addition to flexibility, the proposed approach allows for extensive customization. The neural network can be trained on company or industry-specific data, thereby allowing the sorting model to be customized according to the specific needs of the application. This differentiates the proposed approach from more generic predictive maintenance strategies, providing a more tailored solution.

- One notable advantage of the proposed approach is the incorporation of a sigmoid function for some of the parameters of the MCDA (e.g. NCS) model, as opposed to relying solely on step functions. This allows for a smoother transition between maintenance states, which can lead to better predictive performance. In other words, the neural network is trained to determine the parameters of the model, which has been enhanced with at least one parameter presented as a sigmoid function, unlike the traditional step functions of the model. This makes the model more precise and flexible.

- This proposed approach relates to a computerized method for predicting the maintenance status and remaining lifespan of a component. The method relies on a multi-criteria decision aid model, specifically an NCS model, computed by a previously trained neural network. This approach leverages the analysis of functional data, including previous maintenance plans and real-time sensor data.

- By using the proposed approach, one can predict the maintenance status, which can range from normal operation to urgent maintenance need or to durability improvement. Thus, the proposed approach provides optimization of maintenance resources, improvement in safety, and extension of the lifespan of devices;

- In summary, the proposed approach offers a more accurate, flexible, and customizable method for predictive maintenance, which provides significant benefits over existing methods in the field of predictive maintenance.

The method is now further discussed. The method of use will be as well further discussed hereinbelow.

The method (that trains the neural network to predict the MCDA parameters) is for predicting a maintenance status of a real-world product. Specifically, the method infers a MCDA sorting model that is configured to perform this prediction based on at least one time measurement of maintenance-related physical and/or functional data of the real-world device. The output of the method is thus the MCDA model once configured (*i.e.* once its parameters have been predicted by the trained neural network). The method of use may be part of the method, which in this case corresponds, after performing the steps of the method, performing those of the method of use where the MCDA model is that of which parameters have been predict by the neural network trained by the method. In other words, the method and the method of use may be included in a same computer-implemented process. Alternatively, these methods may be performed independently, *e.g.* by different actors.

As the method trains a neural network, the method is a method of machine-learning. As known *per se* from the field of machine-learning, the processing of an input by a neural network includes applying operations to the input, the operations being defined by data including weight values. Learning a neural network thus includes determining values of the weights based on a dataset configured for such learning, such a dataset being possibly referred to as a learning dataset or a training dataset. For that, the dataset includes data pieces each forming a respective training sample. The training samples represent the diversity of the situations where the neural network is to be used after being learnt. Any training dataset herein may comprise a number of training samples higher than 1000, 10000, 100000, or 1000000. In the context of the present disclosure, by "learning/training a neural network based on a dataset", it is meant that the dataset is a learning/training dataset of the neural network, based on which the values of the weights (also referred to as "parameters") are set.

In the context of the proposed method, the training dataset is the provided dataset including data describing historical real-world maintenance events and properties of devices of a same type as the real-world device. Prior to the training, the method comprises providing the training dataset. This, and data thereof, are now discussed.

The training dataset includes (*e.g.* consists in) data describing historical real-world maintenance events and properties of devices of a same type as the real-world device. By "device", it is meant any mechanical part or any component or any apparatus, such as the following non-limiting examples: an aircraft part (*e.g.* an aircraft engine), an engine (*e.g.* an aircraft engine or a wind turbine engine), a heating device (*e.g.* a heat pump unit), a part of a power grid, a part of a nuclear power plant, or a manufacturing machine. The real-world devices contemplated in the present disclosure are devices that require maintenance. Such a device may comprise one or more sensors attached to the device or built-in the device and configured to acquire time measurements of maintenance-related physical and/or functional data of the real-world device. These physical and/or functional data may consist in any data relevant to the maintenance status/the correct functioning of the device, *i.e.* when these data or a part thereof depart from normal values (*i.e.* that correspond to normal functioning/operation), it is indicative of a maintenance advised (*e.g.* if the disparity with the normal values is beyond a certain threshold) or of a maintenance required (*e.g.* if the disparity with the normal values is above said certain threshold). The claimed method considers a device of one type (*e.g.* aircraft engine, *e.g.* of a same type, such as of a specific type of planes and/or specific to a company) and infers the MCDA parameters for prediction of a maintenance status of a real-world device of this type. The data of the training dataset thus concern devices of the same type of this real-world device (*e.g.* all aircraft engines, *e.g.* of a same type, such as of a specific type of planes and/or specific to a company).

The data describing historical real-world maintenance events and properties designates any data representing, for each device involved in the training dataset, a history of maintenance events of the device (*e.g.* a history of maintenance status with each an associated time/time stamp) together with values of the data concerning physical and/or functional properties of the devices. These training data may for example be data samples each indicating a certain maintenance status at a certain time given measurement of these properties of the device at that time and/or at preceding times. These data may for example include, for several devices (but still of the same type, as discussed above), log files.

Log files are historical records of component maintenance. They contain key information about past operations and maintenance activities. These records include specifics of when a device was operating normally, when maintenance was advised, or when urgent maintenance was required. These historical data serve as a rich learning resource for the neural network, enabling it to understand patterns and draw valuable insights. The log files connect data about physical and/or functional properties of the devices (*e.g.* in the form of IoT sensor data streams) with corresponding maintenance statuses of the devices. For example, the log files may comprise physical and/or functional properties data, such as IoT sensor data, labeled with maintenance statuses, *e.g.* at different times, so as to train the neural network, in a supervised manner, to connect input physical properties data, such as IoT sensor data, with maintenance statuses. In other words, each training data sample may correspond to a respective time stamp and may comprise a log file maintenance status at this time stamp together with the measured IoT sensor data at this time stamp.

This allows the neural network to predict parameters of the MCDA model, so that the MCDA model can take as input IoT sensor data streams and infer corresponding maintenance statuses, as its parameters have been learnt/inferred on data that connects maintenance statuses with IoT sensor data streams (*i.e.* the log files).

IoT (Internet of Things) Sensor Data Streams are data from various IoT sensors installed on the devices. These are the data that may be used in real-time operation (online phase), for example in the method of use. These sensors monitor different operational parameters, such as temperature, pressure, vibration, or other component-specific metrics. The data streams from these sensors provide continuous and up-to-date insights into the components' condition. This real-time data can be then processed and analyzed to predict the maintenance status by being passed through the MCDA model (once inferred by the method).

Providing the training dataset may comprise forming the training dataset by retrieving (*e.g.* downloading), from one or more (*e.g.* distant) memory or server, at least some (*e.g.* all) of the data (*e.g.* log files, *e.g.* stemming from measurements and maintenance operations performed for real-world devices). Alternative or additionally, providing the training dataset may comprise measuring and/or acquiring at least some of the data (*e.g.* log files) from real-world devices and/or realistically synthetizing these data by any suitable method. Alternatively or additionally, providing the training data may comprise simulating the training data, or at least a part thereof, for example using Microsoft Azure as discussed hereinbelow.

Further to the providing of the training dataset, the method then comprises training, based on the training dataset, a neural network to predict the parameters of the MCDA sorting model.

MCDA stands for "Multi-criteria decision-Aiding". MCDA is a paradigm that aims at developing decision-support models explicitly based on the construction of a set of criteria reflecting the relevant aspects of the decision-making problem. These $n$ criteria ($N = \{1, 2 ..., n\}$ with $n \geq 2$) evaluate a set of alternatives $A = \{a, b, c, ... \}$ under consideration with respect to different viewpoints. The purpose of MCDA methodologies is to support the decision maker (DM) by providing methods and frameworks to take decisions regarding the considered decision situation. Decision problems considered in MCDA are of different types and three reference problems are encountered in practice (discussed in reference B. Roy. Multicriteria Methodology for Decision Aiding. Kluwer Academic, Dordrecht, 1996, which is incorporated herein by reference):

- Choice problem: It consists of selecting an alternative or a subset of alternatives. A familiar MCDA choice problem is the supplier selection problem (discussed in M. Khalilzadeh, A. Karami, and Alborz Hajikhani. The multi-objective supplier selection problem with fuzzy parameters and solving the order allocation problem with coverage. Journal of Modelling in Management, 15:705-725, 2020, which is incorporated herein by reference). Indeed, suppliers are evaluated according to several criteria such as the costs, the quality and the on-time delivery. The purpose is to choose a supplier (the best one) from a list of candidates.
- Ranking problem: It consists in ordering a set of alternatives from the best to the worst according to the DM's preferences. The outcome of a ranking method can be either a partial or a complete ranking of the set of alternatives. An interesting example of the ranking problem is the selection of an information system evaluated according to several criteria for companies (discussed in reference Ana Paula Henriques de Gusmão and C. Medeiros. A model for selecting a strategic information system using the fitradeoff. Mathematical Problems in Engineering, 2016:1-7, 2016, which is incorporated herein by reference).
- Sorting problem: It consists in assigning each alternative to a category selected among a set of predefined and ordered categories. The outcome of a sorting method is an assignment of the alternatives among the different categories. For example, a committee of doctors makes the decision whether a patient is accepted for surgery or not by considering several criteria that assess the patient's physical health state (discussed in reference O. Sobrie, M. E. A. Lazouni, S. Mahmoudi, V. Mousseau, and M. Pirlot. A new decision support model for preanesthetic evaluation. Computer Methods and Programs in Biomedicine, 133:183-193, 2016, which is incorporated herein by reference).

The MCDA modeled is configured (*i.e.* once its parameters are predicted by the trained neural network) to predict a maintenance status of a real-world device (*i.e.* of a same type as those from which the training dataset stems) based on one or more input time measurements maintenance-related physical and/or functional data of the real-world device (*e.g.* based on input IoT data stream about the device). In the present disclosure, the maintenance status may be one of: normal operation, maintenance advised, and maintenance required. This means that any maintenance status herein (*i.e.* in the training data or as predicted by the MCDA sorting model) is one of normal operation, maintenance advised, and maintenance required.

In the case of the method, the MCDA model is a MCDA sorting model, *i.e.* that solves a sorting problem. The MCDA model may be a NCS model. NCS stands for "non-compensatory sorting". NCS corresponds to a generalization and a formal description of the Electre Tri procedure (discussed in reference Salvatore Greco, José Figueira, Slowinski Roman, and Bernard Roy. Electre methods: Main features and recent developments. 06 2010, which is incorporated herein by reference). One of its specificities is to account for the alternative evaluations in an ordinal perspective avoiding compensation and enabling to deal meaningfully with qualitative data. The NCS model may aim at sorting devices to one of the three predefined ordered maintenance statuses "Normal operation", "Maintenance advised" and "Maintenance required". Let A be a set of devices evaluated on n criteria. A device a 6 A is represented as a vector $(a_1, ..., a_n)$ where $a_i$ is the evaluation of the device a on criterion i. Each criterion i has a total preorder a preference relation $\geq i$ can be implemented in the model to compare devices. Implementations of the method use two boundaries to delimit the maintenance statuses. These boundaries are defined as limiting profiles, a vector of n values, one for each criterion:

- $b^1 = (b_1^1, ..., b_n^1)$ : separate the maintenance statuses "Normal operation" and "Maintenance advised"

- $b^2 = (b_1^2, ..., b_n^2)$ : separate the maintenance statuses "Maintenance advised" and "Maintenance required"

Because maintenance statuses are ordered, there is dominance among limiting profiles:

$$b_i^1 \leq b_i^2, \forall i \in [1, ..., n]$$

A device is assigned to a maintenance status if it is better than the lower limiting profile on a sufficiently strong subset of criteria while this is not the case when comparing the component to the upper limiting profile. These are referred to as "comparison rules" of the NCS model, a concept which is known in the field of NCS models.

The NCS model may be implemented according to the MR-Sort method as follows. A positive weight is associated to each criterion whose sum is 1, and:

- A device is assigned to the maintenance status "Normal operation" if and only if : $\sum_{i:a_i \geq b_i^1} w_i < \lambda$

- A device is assigned to the maintenance status "Maintenance advised" if and only if : $\sum_{i:a_i \geq b_i^2} w_i < \lambda$ and $\sum_{i:a_i \geq b_i^1} w_i \geq \lambda$

- A device is assigned to the maintenance status "Maintenance required" if and only if : $\sum_{i:a_i \geq b_i^2} w_i \geq \lambda$.

The method infers the MCDA model by predicting its parameters using the neural network. That is, once the neural network is trained, the method may comprise applying the neural network, or using the parameters predicted by the network at the end of its training (*e.g.* once a convergence criterion of the training has been reached), to set the parameters of the MCDA model as those predicted by the neural network. Prior to that, the method comprises training the neural network. The training comprises iterations of: feeding to the neural network training samples of the training dataset, applying the MCDA model, or assignment rules (the concept of assignment rules of a MCDA model being known) thereof, with the current values of its parameters (*i.e.* as predicted by the neural network in its current training state), and modifying the parameters/weights of the neural network if the result of the application of the MCDA model or its assignment rules is unsatisfactory, and this until satisfactory results are reached. For example, this may consist in repeatedly feeding the neural network with IoT data of the log files and assessing whether the resulting predicted parameters result in correct prediction of maintenances statuses associated with the IoT data in the log files, until satisfactory results are reached.

For example, when the MCDA model is a NCS model, the training uses machine-learning techniques to learn the MR-Sort parameters from the training dataset, *e.g.* constituted by previous maintenance interventions (Log Files). The neural network represents the assignment rules of the NCS model. This constitutes a neural representation of the MR-Sort parameters, which are thus the parameters inferred by the neural network once trained.

The neural network may be based on a sigmoid activation function for implementation of the comparison rules in the MCDA sorting model. In this case, at least one parameter of the MCDA sorting model is a sigmoid function implementing comparison rules. For example, if the MCDA model is a NCS model, the assignment rules of the MCDA model correspond to inequalities/conditions (also referred to as "comparison rules") of the type $a \geq b$. The NCS model thus comprises one or more parameters to structurally represented these conditions/inequalities, and these parameters comprise one or more sigmoid functions: one sigmoid function for each inequality/condition of the type $a \geq b$. To learn such parameters, the neural network may be based on one or more sigmoid activation functions (*e.g.* one for each condition, *e.g.* per layer of the neural network).

Usually, in the NCS paradigm, these conditions are structurally represented by step functions. To the contrary, the proposed method may structurally represent these conditions using sigmoid functions as discussed above. FIG.s 1 and 2 illustrate a step function and a sigmoid function, for illustrating the differences between the two. The neural network may for that use as activation functions sigmoid functions, which are differentiable activation functions. This allows the use of gradient descent during training. To the contrary, a step function is non-differentiable. The method may modify each

sigmoid function $\sigma(x) = \frac{1}{1+e^{-x'}}$, to resemble its corresponding step function more closely. This is achieved by multiplying the difference between the $a$ and $b$ by a large constant $M$. This multiplication serves to flatten the sigmoid function vertically. By fine-tuning the value of M, implementations of the method can control the steepness of the sigmoid curve around the threshold, making it as sharp or smooth as needed. However, a balance must be maintained as extremely high values of M can pose challenges during the gradient-based optimization process. For each given condition $a \geq b$, the adapted sigmoid function (*i.e.* that forms a parameter of the NCS model) is then defined as:

$$\sigma(a,b) = \frac{1}{1 + e^{(-M(a-b))}}$$

This ensures that the function's output approximates 0 and 1 for values considerably below or above the threshold, respectively.

To infer such sigmoid functions parameters of the sorting model for the conditions of the type $a \geq b$, the neural network may be based on sigmoid activation functions, as discussed above. This may be implemented as follows, to train a neural network model crafted on the principles of NCS model learning. This model treats each component as an individual input. Thus, the architecture of the neural network comprises in implementations $n$ independent single layers, with each layer corresponding to a specific evaluation $a_i$. Each of these individual layers then compares the input value with a series of trainable, positive, and sequentially ordered limit profiles using a respective sigmoid activation function as discussed previously. As a result, each $i^{th}$ layer hosts two unique activation sigmoidal functions. These functions serve to map the

input value $a_i$ to a score between 0 and 1 $y_i^1(a_i)$ and $y_i^2(a_i)$ based on its proximity to each limit profile $b^1$ and $b^2$, effectively categorizing the input.

In these implementations, the subsequent phase of the training process involves calculating 2 weighted sums, formulated as:

$$Sc^1(a) = \sum_{i=1}^{n} w_i * y_i^1(a_i)$$

$$Sc^2(a) = \sum_{i=1}^{n} w_i * y_i^2(a_i)$$

These sums encapsulate the score of each component against the limit profiles $b^1$ and $b^2$. It's important to note that the implementations apply a uniform set of weights $w_i$ to each sum to maintain consistency.

By design, this calculation sequence results in a set of 2 ordered scores $Sc^1(a) \leq Sc^2(a)$, which fall within the 0 to 1 range. These implementations then compare these scores against a trainable threshold, $\lambda$, in the final layer to determine the appropriate maintenance status.

The maintenance status assignment rule is as follows:

- A component is assigned to the maintenance status **"Normal operation"** if and only if: $Sc^1(a) < \lambda$
- A component is assigned to the maintenance status **"Maintenance advised"** if and only if: $Sc^2(a) < \lambda$ and $Sc^1(a) > \lambda$
- A component is assigned to the maintenance status **"Maintenance required"** if and only if: $Sc^2(a) \geq \lambda$

To implement this methodology, each score is compared to $\lambda$ using sigmoid functions. Similarly, to the initial layer, this generates two additional sigmoidal functions.

These implementations apply the SoftMax function coupled with the Cross-Entropy Loss function to categorize the components. This is achieved using the formula - $\sum_{i=1}^{m} t_i * log(p_i)$, where $t_i$ is the truth label and $p_i$ represents the

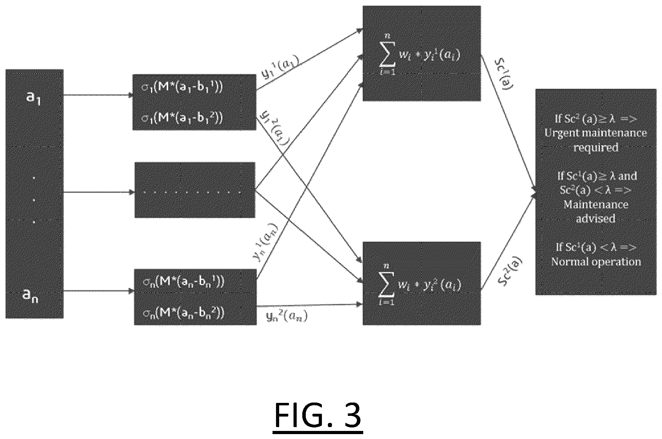

Softmax probability for the $i^{th}$ maintenance status. The complete neural network architecture according to these implementations is illustrated in FIG. 3.

These implementations may use the gradient descent variant known as "Adam", a highly regarded algorithm in the field. This choice is driven by several of Adam's appealing properties including its adaptive learning rate, impressive accuracy, and swift execution time. Adam is thus an ideal fit for the presently proposed method, balancing efficiency and effectiveness in training the neural network.

These implementations may use the following optimization (inspired and adapted from reference Loshchilov, Ilya & Hutter, Frank. (2017). Fixing Weight Decay Regularization in Adam., which is incorporated herein by reference):

1. given $\alpha \in (0,1), \beta_1 = 0.9, \beta_2 = 0.999, \epsilon = 10^{-8}, w_r = 0.01, \xi \in (0.1)$

2. initialize epoch number $\tau \leftarrow 0$, parameter vector $x_{\tau=0} \in$ $R^n$, first moment vector $m_{\tau=0} \leftarrow 0$, second moment vector $v_{\tau=0} \leftarrow 0$

3. evaluations $\leftarrow g(A^R)$

4. input $\leftarrow$ Preprocessing (evaluations)

5. repeat

6.     $\tau \leftarrow \tau + 1$

7.     $\text{input}_{noised} \leftarrow \text{input} + N(0, \xi)$

8.     $g_\tau \leftarrow \nabla \text{Loss}\big(Sc(x_{\tau-1}, \text{input}_{noised})\big)$

9.     $m_\tau \leftarrow \beta_1 m_{\tau-1} + (1 - \beta_1)g_\tau$

10.     $v_\tau \leftarrow \beta_2 v_{\tau-1} + (1 - \beta_2)g_\tau^2$

11.     $\widehat{m_\tau} \leftarrow m_\tau/(1 - \beta_1^\tau)$

12.     $\widehat{v_\tau} \leftarrow \dfrac{v_\tau}{(1 - \beta_2^\tau)}$

13.     $x_\tau \leftarrow x_{\tau-1} - \left( \dfrac{\alpha \widehat{m_\tau}}{(\sqrt{\widehat{v_\tau}} + \epsilon)} + w_\tau x_{\tau-1} \right)$

14. until stopping criterion is met

Several hyperparameters may be essential to the functionality of the Adam optimizer. These hyperparameters may critically influence the efficiency, speed, and effectiveness of the solution that the method determines (as discussed in reference Krzysztof Martyn, Mitosz Kadziński, *Deep preference learning for multiple criteria decision analysis, European Journal of Operational Research,* Volume 305, Issue 2, 2023, Pages 781-805, ISSN 0377-2217).

- The learning rate, denoted as $\alpha$, determines the size of the adjustments made to the parameters during each optimization step. If this rate is set too low, the learning process may be sluggish, risking an early halt at a local optimum. Conversely, a high rate may overlook the optimum and lead to a failure in convergence.
- Momentum factors, $\beta_1$ and $\beta_2$, assess the influence of past parameter improvements on current steps. By applying insights gained from earlier stages of the learning process, momentum facilitates faster and more efficient optimization, smoothing the path towards a stable optimization direction less susceptible to perturbations during training.
- The factor $\varepsilon$ serves as a small denominator value, introduced to ensure stability in the computations.
- The weight decay factor, represented as $w_\tau$, also contributes to the optimization process.

Beyond the parameters involved in the Adam optimizer, in implementations the neural network may also feature its own set of hyperparameters. These may include M and M2, which aid in approximating the step function, and the number of epochs, indicative of the duration of model training. The precise values for these parameters are a matter of implementation.

It is also proposed a MCDA sorting model obtainable (*e.g.* having been obtained directly) according to the method. In other words, for a given device type, the MCDA sorting model has parameters that have the same values as those that would have been inferred/predicted by the neural network trained by the method on a training dataset related to this device type. For example, the MCDA sorting model may have as values of its parameters those that directly result from the method on such training dataset, *i.e.* that have been inferred by the neural network once trained according to the method. The proposed MCDA sorting model is thus configured to take as input time measurements of maintenance-related physical and/or functional data of a real-world device and to output a prediction of a maintenance status of the real-world device. The proposed MCDA sorting model may be a NCS model. The proposed MCDA sorting model may comprise one or more parameters that each are a sigmoid function implementing a respective comparison rule (*i.e.* structurally defining a condition/inequality as discussed above).

It is also provided a method of use of the MCDA sorting model. This is now discussed.

The method of use comprises providing at least one time measurement of maintenance-related physical and/or functional data of the real-world device. The at least one time measurement stems from at least one physical sensor of the device and/or attached to the device. The providing of that at least one time measurement may comprise receiving, by the computer system performing the method of use, one or more IoT sensor data stream from one or more IoT physical sensors measuring these data. These one or more IoT sensors may each be a IoT sensor of the device (*i.e.* integrated therein) or an external IoT sensor attached to the device. Providing the at least one time measurement may comprise, by the one or more physical sensors (*e.g.* IoT sensors), measuring the physical and/or functional data. This may be done automatically, the sensors being configured for example for providing measurements at regular time intervals. Providing the at least one time measurement may then comprise transmitting the measurements (*e.g.* on the fly as the measurements are available, or all at once or by groups, *e.g.* with intermediate storing stages) to the computer carrying out the method of use, and, by this computer, receiving the measured data as discussed above.

The method of use then comprises applying the MCDA sorting model to the provided at least one time measurement. The application of the MCDA sorting model results in the MCDA sorting model outputting a prediction of a maintenance status of the real-world device, since it has been designed (*i.e.* its parameters having been inferred) for this purpose. It is to be understood that the devices for which the MCDA sorting model is used in the method of use are of the same type as those involved in the training dataset based on which the model's parameters have been inferred.

The provided measurement(s) may be real-time measurement(s), for example a real time IoT sensor data stream. The MCDA sorting model may be applied in real-time and continuously along reception of the real-time measurement(s), *e.g.* in real-time and continuously along reception of the real time IoT sensor data stream. This amounts to say that the steps of the method of use may be iterated, wherein the providing of the measurements is done repeatedly and in real-time (*e.g.* at regular time intervals, *e.g.* short time intervals, to result for example in a real time stream of IoT sensor data), the application of the MCDA sorting model being then performed iteratively and in real-time on these received measurements (*e.g.* along their reception, or at short regular time intervals along reception of the measurements) to continuously and in real-time predict the maintenance status along reception of the IoT sensor data stream.

Prior to feeding the IoT sensor data stream to the sorting model, the method may optionally, in implementations, use advanced stream analysis techniques to process this IoT data in real-time. The aim is to identify patterns and detect any anomalies that could indicate potential maintenance needs. The processed data may then be fed into the NCS model for predictive maintenance decision-making. If this is implemented, then a corresponding pre-processing is done either directly on the provided training dataset or during the training to infer a NCS model adapted to take as input this processed data instead of directly the IoT data stream.

The method of use may comprise displaying the maintenance statuses of the device, upon their prediction, on a computer screen of the device and/or of a computer connected (*e.g.* through a wireless connection) to the device, for example a computer of the device's manufacturer or of a maintenance company. Alternatively or additionally, the maintenances statuses may be, upon their prediction, transmitted to a computer or storage medium (or database) of the device's manufacturer or of a maintenance company and stored thereon (*e.g.* in the form of log files) and/or may be stored on a storage medium (*e.g.* database) of the device itself (*e.g.* in the form of log files). Alternatively or additionally, the method may comprise outputting a visual and/or sound alert, *e.g.* on the device itself and/or on the computer of the device's manufacturer or of the maintenance company, each time the status is "maintenance required" (and optionally each item the status is maintenance advised).

The method of use may further comprise performing maintenance of the device based on the prediction of the MCDA sorting model. This may be done upon reception of an alert when the predicted maintenance status is maintenance required or maintenance advised as discussed above and may comprise then physically performing the necessary physical technical actions to return the device to normal operation.

The method of use may further comprise (*e.g.* for one or more devices) comparing one or more predictions of the MCDA sorting model with one or more real-world maintenance statuses of the device. The real-world maintenance statuses may for example stem from conclusions of a professional regarding the maintenance (*e.g.* in parallel of the predictions of the model). In this case, the method of use further comprises, if the comparison results in a disparity (*i.e.* at least some maintenance statuses outputted by the MCDA model do not correspond to the real-world ones), updating the MCDA sorting model based on the one or more real-world maintenance statuses of the device. Updating may comprise fine-tuning some parameters of the model and/or re-training the neural network to refine the parameters, for example by adding to the training data the data corresponding to the real-world maintenance statuses, for example physical and/or functional data associated with these statuses.

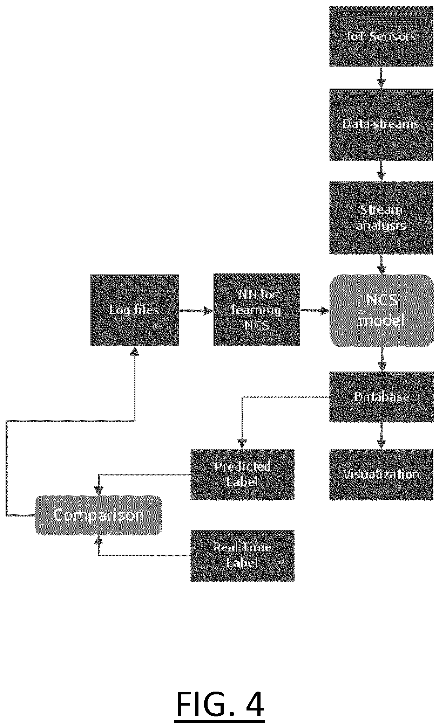

FIG. 4 illustrates a flowchart of an implementation of the method and method of use wherein updating of the NCS model is done. This diagram provides an overview of the proposed innovative process for predictive maintenance. A Neural Network (NN) trained on log files is used to learn a maintenance classification model - the NCS model. This model classifies components into three maintenance statuses: Normal operation, Maintenance advised, and Maintenance required. In real-time operation, data from IoT sensors are processed and analyzed, and then passed through the NCS model for predictive maintenance decisions. The outcomes may be stored in a database and visualized for easy interpretation. To keep the system adaptive and accurate, the method may regularly updates the NCS model as discussed above. This is done by comparing the model's predictions with actual component statuses, updating the log files accordingly, and retraining the NN. This approach is dynamic, adaptive, and designed to optimize maintenance operations, minimizing unforeseen equipment downtime.

In production, the proposed predictive maintenance system operates in real-time, continuously analyzing data from IoT sensors to predict maintenance status.

The NCS model, trained through the neural network using log files, is the core of the implementation. As receive live data streams from IoT sensors is received, this data is passed through the NCS model. The model then classifies the maintenance status of the components into one of three categories: Normal operation, Maintenance advised, or Maintenance required.

The IoT sensor data streams provide up-to-the-minute information about various operational parameters of the components. Employ advanced stream analysis techniques may be used to process this data in real-time. The aim is to identify patterns and detect any anomalies that could indicate potential maintenance needs. The processed data is then fed into the NCS model for predictive maintenance decision-making.

Once the NCS model has made its predictions, these may be stored in a database as discussed above for record-keeping and further analysis. The method may also comprise a visualization of the results in a user-friendly format. This makes it easy for maintenance personnel to interpret the predictions and make informed decisions about necessary maintenance actions. Visualization tools can show component status at a glance, alert operators to potential issues, and even track the performance of the predictive maintenance system over time.

The model update process hinges on the comparison of predicted maintenance statuses with actual ones. After operating the model on real-time data streams, this update may comprise perform an evaluation by contrasting the predicted outcomes with the actual maintenance statuses observed. The first step may involve lining up the predicted maintenance statuses with their real counterparts for a direct comparison. This allows to spot any discrepancies, whether they are false alarms (instances where maintenance was predicted but not necessary) or missed detections (where necessary maintenance was not predicted). Upon completing this evaluation, the method of use may then update the log files. They may be enriched with the newly collected information: sensor data, predicted maintenance statuses, and actual maintenance statuses. This additional data augments the maintenance database, aiding in refining future model training. These updated log files may then be utilized to retrain the neural network. This continual learning process enables the NCS model to consistently evolve and adapt to variations and new trends observed in the maintenance data. This cycle of evaluation, updating, and retraining may be regularly repeated to ensure the continuous improvement of the proposed predictive maintenance system.

An example of the method and of the method of use is now discussed, where the device is an aircraft engine.

In the context of predictive maintenance production for IoT, a complex infrastructure is required to monitor and measure the condition of machines, specifically aircraft engines. More precisely, data-based prognostics are dependent on the availability of statistically significant quantities of telemetry and maintenance execution records up until a potential engine failure. From these, equipment degradation models can be learned, enabling predictions to be made based on historical and newly collected data. Finding real-world datasets containing records up to failure is virtually impossible due to their commercially sensitive nature.

For this reason, an open-source simulator from Microsoft Azure may be used, allowing this simulation to be made possible. Built on theoretical physics equations, the engine's temperature (in degree Celsius (°C)), pressure (in bar), rotation speed (in revolutions per minute (RPM)), and pressure state (in bar), as well as the environmental condition based on the same criteria, can be simulated over time. These form the physical and/or functional data discussed above for the aircraft. Arbitrarily large data can be generated, and real-time telemetry streams can be provided, making it possible for interactive tests to be conducted.

An example of the result obtained for the telemetry streams is provided below.

| States¤ | timestamp¤ | Speed desired¤ | Ambiant temperature¤ | Ambiant pressure¤ | speed¤ | temperature¤ | pressure¤ |
|---|---|---|---|---|---|---|---|
| State·1¤ | 2017-05-15· 00:51:00¤ | 1000¤ | 19.90¤ | 100.96¤ | 554.40¤ | 23.08¤ | 217.46¤ |
| State·2 ¤ | 2017-05-15· 00:51:01¤ | 1000¤ | 20.06¤ | 101.08¤ | 828.62¤ | 26.88¤ | 488.80¤ |
| State·3¤ | 2017-05-15· 00:51:02¤ | 1000¤ | 19.93¤ | 101.08¤ | 966.91¤ | 31.61¤ | 780.47¤ |
| ...¤ | ...¤ | ...¤ | ...¤ | ...¤ | ...¤ | ...¤ | ...¤ |
| State·11¤ | 2017-05-15· 00:51:03¤ | 1000¤ | 19.92¤ | 100.99¤ | 1070.76¤ | 42.97¤ | 1163.96¤ |
| State·12¤ | 2017-05-15· 00:51:04¤ | 1000¤ | 19.96¤ | 100.96¤ | 1071.49¤ | 43.22¤ | 1165.30¤ |
| ...¤ | ...¤ | ...¤ | ...¤ | ...¤ | ...¤ | ...¤ | ...¤ |

A maintenance log file is also obtained, which records the engine's failures.

| Timestamp | level |
|---|---|
| 2017-06-06 21:49:29 | *Maintenance required* |
| 2017-06-08 06:18:10 | *Maintenance required* |
| 2017-06-08 20:16:42 | *Maintenance required* |
| ... | ... |

Each training data sample may correspond to a respective time stamp and may comprise the log file maintenance status at this time stamp together with the measured data of the telemetry stream at this time stamp.

Training in this example is now discussed. The initial work in the training process involves making this simulation compatible with an implementation of the model, and for that it is necessary to obtain monotonically increasing criteria. To accomplish this, three features will be created related to rotation speed, temperature, and pressure: the absolute difference of the three states of the machine with the three states of the environment will be taken, for example, for temperature; it will be | ambient temperature - machine temperature |. Finally, a last feature representing the machine's operating duration will be used, which allows the measurement of how long the machine has been active.

It is also noted that in the first seconds (approximately 10 seconds) when the machine begins to operate, the temperature, pressure, and rotation speed are noticeably low until it starts working, that is why these measurements will be removed.

The modeling, therefore, includes four criteria for three categories Normal operation, Maintenance advised, and Maintenance required. To label the training set, the maintenance file is used, which indicates when the engine breaks down and the associated time. From this temporal reference, telemetry streams are labeled as follows:

- If the machine does not break down during execution, it is labeled Normal operation throughout.
- If the machine breaks down after a period p, t1 = p/2 and t2 = 3p/4 are calculated, representing two temporal markers, the first at 50% of the total time before the breakdown, and the second at 75%. Labeling is then performed from 0 to t1 with Normal operation, t1 to t2 with Maintenance advised, and between t2 and the last day of period p Urgent maintenance required.

This pre-process provides both a training set and a test set for the neural network. The input data consists of:

- A list of 4 values for each of the 4 monotonous criteria: temperature, rotation speed, pressure, and operating duration. Since the criteria must be maximized and fall between 0 and 1, normalizing the values and defining the best category as Maintenance required is sufficient. Indeed, an environment-similar machine state is sought, where a smaller absolute difference indicates better machine functioning, while a higher value presents more risks. Regarding the criterion on the duration of operation, a machine at the beginning of service is less at risk than a machine at the end of service. Normalization between 0 and 1 is performed with the standard method: normalized_value = (old_value - min_value) / (max_value - min_value).

- The label, or category, associated with the previous criteria values. The neural network will then be trained with the training set as previously described, allowing a preliminary classification of the test set.

Inference is in this example now discussed. For that, let us revisit the telemetry data streams previously generated to observe a concrete case. It should be noted that the telemetry stream may contain a very large number of measurements, in this case, tens of thousands. As mentioned for the training above, the first 10 measurements are discarded, which the machine uses to reach its cruising rhythm. It is known that the machine did not break down with the second maintenance table and that it ran for a time of 2 minutes at a rate of 1 measurement per second, amounting to 120 measurements. Given the discarding of the initial operational measurements of the machine, attention is drawn to measurements 11 and 12: The process is begun by establishing the absolute value of the difference between the machine's measurement and the environmental measurement, along with the elapsed time:

| States | temperature | pressure | speed | duration |
|--------|-------------|----------|-------|----------|
| State 1 | 23.05 | 1062.97 | 70.76 | 3 |
| State 2 | 23.26 | 1064.34 | 71.49 | 4 |

It is also measured that within the machine's operating interval, the maximum and minimum states for the first three criteria are:

| Valeurs | temperature | pressure | speed |
|---------|-------------|----------|-------|
| Valeur min | 22.98 | 1060.32 | 69.52 |
| Valeur max | 23.54 | 1069.26 | 72.89 |

This results in the normalized values:

| States | temperature | pressure | speed | duration |
|--------|-------------|----------|-------|----------|
| State 1 | 0.125 | 0.2964 | 0.3679 | 0.025 |
| State 2 | 0.5 | 0.4497 | 0.5846 | 0.0333 |

Thus, if the values from the previous table were input into the neural network, *Normal operation* would be returned for each state of the machine.

Update of the model in this example is now discussed. The goal is to have a scalable model, meaning that it should be adaptable if given new reference data to become increasingly accurate. After several weeks of operation, it was detected that a machine broke down while the model predicted Maintenance advised, and so the model must be updated to correct this error. The idea is to add these new reference data to the learning set and retrain the neural network, initializing the network variables with the old values.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 5 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1.   A computer-implemented method for predicting a maintenance status of a real-world product, the method comprising:

- providing a dataset including data describing historical real-world maintenance events and properties of devices of a same type as the real-world device; and
- training, based on the dataset, a neural network to predict parameters of a MCDA sorting model, the MCDA sorting model being configured to take as input at least one time measurement of maintenance-related physical and/or functional data of the real-world device and to output a prediction of a maintenance status of the real-world device.

2.   The method of claim 1, wherein the MCDA sorting model is a NCS model.

3.   The method of claim 1 or 2, wherein the neural network is based on a sigmoid activation function for implementation of comparison rules in the MCDA sorting model, and at least one parameter of the MCDA sorting model is a sigmoid function implementing comparison rules.

4.   The method of any one of claims 1 to 3, wherein the maintenance status is one of: normal operation, maintenance advised, and maintenance required.

5.   A MCDA sorting model obtainable according to the method of any one of claims 1 to 4.

6.   A MCDA sorting model configured to take as input time measurements of maintenance-related physical and/or functional data of a real-world device and to output a prediction of a maintenance status of the real-world device, at least one parameter of the MCDA sorting model being a sigmoid function implementing comparison rules, wherein optionally the MCDA sorting model is obtainable according to the method of claim 3.

7. A method of use of the MCDA sorting model according to claim 5 or 6, comprising:

   - providing at least one time measurement of maintenance-related physical and/or functional data of the real-world device; and
   - applying the MCDA sorting model to the provided at least one time measurement, thereby outputting a prediction of a maintenance status of the real-world device.

8. The method of claim 7, wherein the at least one time measurement consists in at least one real-time measurement.

9. The method of claim 8, wherein the MCDA sorting model is applied in real-time.

10. The method of any one of claims 7 to 9, wherein the at least one time measurement stems from at least one physical sensor of the device and/or attached to the device.

11. The method of any one of claims 7 to 10, wherein the method further comprises:

   - comparing one or more predictions of the MCDA sorting model with one or more real-world maintenance statuses of the device; and
   - if the comparison results in a disparity, updating the MCDA sorting model based on the one or more real-world maintenance statuses of the device.

12. The method of any one of claims 7 to 11, wherein the method further comprises:

   - performing maintenance of the device based on the prediction of the MCDA sorting model.

13. A computer program comprising instructions which, when executed by a computer system, cause the computer to perform the method of any one of claims 1 to 4 and/or the method of any one of claims 7 to 12.

14. A computer-readable data storage medium having recorded thereon the computer program of claim 13 and/or the MCDA sorting model of claim 5 and/or the MCDA sorting model of claim 6.

15. A computer system comprising a processor coupled to a memory, the memory having recorded thereon the computer program of claim 13 and/or the MCDA sorting model of claim 5 and/or the MCDA sorting model of claim 6.

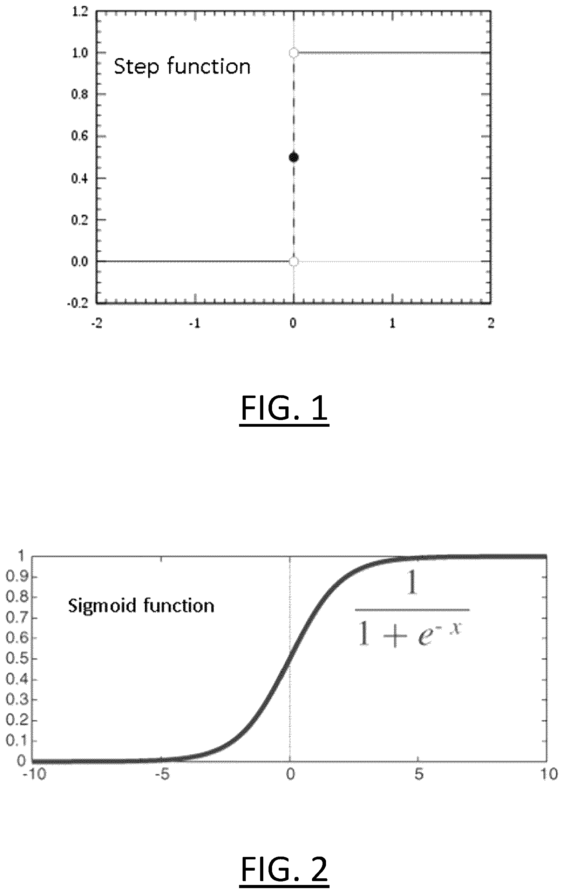

## FIG. 1

## FIG. 2

# FIG. 3

IoT Sensors

Data streams

Stream analysis

Log files → NN for learning NCS → NCS model

Database

Predicted Label

Real Time Label

Comparison

Visualization

# FIG. 4

## FIG. 5

Europäisches
Patentamt

European
Patent Office

Office européen
des brevets

# EUROPEAN SEARCH REPORT

Application Number

EP 23 30 6960

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/252383 A1 (CELLA CHARLES HOWARD [US] ET AL) 10 August 2023 (2023-08-10) * paragraphs [0529], [0713], [0773], [0775], [0960], [1182], [1187], [1603], [1756], [1891], [1922] * * paragraphs [2175], [2533] * | 1-15 | INV. G06N3/048 G06N3/09 |
| A,D | SOBRIE OLIVIER ET AL: "A new decision support model for preanesthetic evaluation", COMPUTER METHODS AND PROGRAMS IN BIOMEDICINE, ELSEVIER, AMSTERDAM, NL, vol. 133, 6 June 2016 (2016-06-06), pages 183-193, XP029635560, ISSN: 0169-2607, DOI: 10.1016/J.CMPB.2016.05.021 * page 186, left-hand column, line 12 - page 187, left-hand column, line 30 * | 1-15 | |

TECHNICAL FIELDS
SEARCHED      (IPC)

G06N
G05B

The present search report has been drawn up for all claims

| Place of search | Date of completion of the search | Examiner |
|---|---|---|
| The Hague | 14 May 2024 | Bykowski, Artur |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 6960

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2024

| Patent document cited in search report | Publication date | Patent family member(s) | Publication date |
|---|---|---|---|
| US 2023252383 A1 | 10-08-2023 | US 2023219230 A1 | 13-07-2023 |
| | | US 2023222454 A1 | 13-07-2023 |
| | | US 2023249349 A1 | 10-08-2023 |
| | | US 2023252383 A1 | 10-08-2023 |
| | | US 2023252776 A1 | 10-08-2023 |
| | | US 2023297904 A1 | 21-09-2023 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. ROY**. Multicriteria Methodology for Decision Aiding. Kluwer Academic, 1996
- **M. KHALILZADEH** ; **A. KARAMI** ; **ALBORZ HAJI-KHANI**. The multi-objective supplier selection problem with fuzzy parameters and solving the order allocation problem with coverage. *Journal of Modelling in Management*, 2020, vol. 15, 705-725
- **ANA PAULA HENRIQUES DE GUSMÃO** ; **C. MEDEIROS**. A model for selecting a strategic information system using the fitradeoff. *Mathematical Problems in Engineering*, 2016, vol. 2016, 1-7
- **O. SOBRIE** ; **M. E. A. LAZOUNI** ; **S. MAHMOUDI** ; **V. MOUSSEAU** ; **M. PIRLOT**. A new decision support model for preanesthetic evaluation. *Computer Methods and Programs in Biomedicine*, 2016, vol. 133, 183-193
- **SALVATORE GRECO** ; **JOSÉ FIGUEIRA** ; **SLOWINSKI ROMAN** ; **BERNARD ROY**. *Electre methods: Main features and recent developments*, June 2010
- **LOSHCHILOV, ILYA** ; **HUTTER, FRANK**. *Fixing Weight Decay Regularization in Adam.*, 2017